# EUROPÄISCHE PATENTSCHRIFT

(11) **EP 3 489 773 B1**
(45) Veröffentlichungstag und Bekanntmachung des Hinweises auf die Patenterteilung: **25.12.2024**
(21) Anmeldenummer: 17203614.7
(22) Anmeldetag: 24.11.2017
(51) Int. Cl.: G05B 13/02, G05B 13/04

(54) **VERFAHREN ZUM RECHNERGESTÜTZTEN STEUERN EINES TECHNISCHEN SYSTEMS, INSBESONDERE EINER ENERGIEERZEUGUNGSANLAGE**
METHOD FOR THE COMPUTER-BASED CONTROL OF A TECHNICAL SYSTEM, IN PARTICULAR AN ENERGY GENERATION PLANT
PROCÉDÉ DE COMMANDE ASSISTÉ PAR ORDINATEUR D'UN SYSTÈME TECHNIQUE, EN PARTICULIER D'UNE INSTALLATION DE PRODUCTION D'ÉNERGIE

(43) Veröffentlichungstag der Anmeldung: 29.05.2019
(73) Patentinhaber: Siemens Aktiengesellschaft, 80333 München (DE)
(72) Erfinder: Hein, Daniel, 81549 München (DE); Hentschel, Alexander, 81929 München (DE); Udluft, Steffen, 82223 Eichenau (DE)
(74) Vertreter: Siemens Patent Attorneys

(56) Entgegenhaltungen:
- WO-A1-2010/121695
- DE-A1- 102016 010 796

## Beschreibung

Die Erfindung betrifft ein Verfahren zum rechnergestützten Steuern eines technischen Systems, insbesondere einer Anlage zur Stromerzeugung.

Im Stand der Technik sind verschiedene Verfahren bekannt, um stromerzeugende Anlagen zu steuern. Insbesondere für eine effiziente Steuerung einer Anlage zur Stromerzeugung sind die Ermittlung eines optimalen Steuerungsverfahrens und die Verwendung des optimalen Steuerungsverfahrens von Vorteil.

Aus DE 10 2016 010 796 A1 ist ein Verfahren zur Kalibrierung eines Simulationsmodells zur Berechnung der Funktionalität einer Abgas-Nachbehandlungseinrichtung bekannt. Für die Kalibrierung kann ein adaptierter evolutionärer Algorithmus oder ein adaptierter, schwarmintelligenter Algorithmus verwendet werden. Beispielsweise kann als adaptierter evolutionärer Algorithmus eine Co-Varianzmatrix-Evolutionsstrategie und als adaptierter schwarmintelligenter Algorithmus eine Partikel-Schwarmoptimierung verwendet werden.

Aus WO 2010/121695 A1 ist ein Regelsystem für einen komplexen Prozess, insbesondere zur Regelung eines Verbrennungsprozesses in einem Kraftwerk, bekannt, wobei eine Regelstrecke und wenigstens ein Regler vorgesehen sind. Das Regelsystem ist hierarchisch in verschiedene Ebenen aufgeteilt, wobei die erste Ebene den zu regelnden komplexen, realen Prozess repräsentiert und durch die Regelstrecke verwirklicht wird. Die zweite Ebene wird durch ein Interface zum Prozess repräsentiert und durch ein Prozessleitsystem realisiert. Die dritte Ebene wird durch die Regelung des Prozesses repräsentiert und durch den wenigstens einen aktiven Regler realisiert. Die vierte Ebene wird durch eine übergeordnete Aufsicht repräsentiert und durch einen Hauptregler realisiert. Der Hauptregler trainiert Simulatoren, die die Regelstrecke simulieren. Zudem entwickelt der Hauptregler eine Menge von Reglern durch Tests an den Simulatoren. Zudem kann die Regelung in der dritten Ebene unter mehrere aktive Regler in Teilbereiche aufgeteilt sein, welche Teilprozessen des komplexen Prozesses zugeordnet sind.

Die Aufgabe der Erfindung besteht darin, ein verbessertes Verfahren zum rechnergestützten Steuern eines technischen Systems bereitzustellen und zu verwenden.

Die Aufgabe wird durch die unabhängigen Patentansprüche 1, 6 und 7 gelöst. In den abhängigen Ansprüchen 2-5 sind Weiterbildungen der Erfindung angegeben.

Ein Vorteil des beschriebenen Verfahrens besteht darin, dass eine verbesserte Steuerung des technischen Systems erreicht wird. Dies wird dadurch erreicht, dass anhand eines Betriebsdatensatzes und anhand eines Systemmodells des technischen Systems mit einem insbesondere gradientenfreien Optimierungsverfahren ein Optimierungsdatensatz ermittelt wird. Mithilfe des Optimierungsverfahrens wird ein offenes Verfahren verwendet, um einen Optimierungsdatensatz zu ermitteln. Auf Basis des Optimierungsdatensatzes werden mithilfe eines Auswahlverfahrens relevante Parameter des technischen Systems ausgewählt, die eine vorteilhaftere Steuerung des technischen Systems ermöglichen als andere Parameter des technischen Systems.

Mithilfe der ausgewählten relevanten Parameter wird ein Steuerverfahren für das technische System ermittelt. Das ermittelte Steuerverfahren wird zur Steuerung des technischen Systems verwendet. Unter dem Begriff steuern wird sowohl steuern als auch regeln verstanden. Durch das vorgeschlagene Verfahren kann mit weniger Rechenaufwand ein optimiertes Steuerverfahren für das technische System ermittelt werden.

In einer Ausführungsform ist das verwendete Auswahlverfahren ein adaptives wechselseitiges Informations-Auswahlverfahren (adaptiv mutual information feature selection, AMIFS). Mithilfe dieses Verfahrens können geeignetere relevante Parameter für die Steuerung des technischen Systems ausgewählt werden als mit anderen Auswahlverfahren. Somit wird durch die genauere Auswahl der relevanten Parameter eine weitere Verbesserung des Steuerverfahrens erreicht.

In einer weiteren Ausführungsform wird anhand der ausgewählten relevanten Parameter mithilfe eines modellbasierten bestärkenden Lernverfahrens das Steuerverfahren ermittelt. Dadurch kann schnell und präzise ein optimiertes Steuerverfahren für das technische System ermittelt werden.

Mithilfe des modellfreien bestärkenden Lernverfahrens wird anhand der ausgewählten relevanteren Parameter das Steuerverfahren ermittelt. Auch die Verwendung des modellfreien bestärkenden Lernverfahrens kann zur Ermittlung eines für das technische System optimierten Steuerverfahrens verwendet werden.

In einer Ausführungsform wird als Optimierungsverfahren ein Schwarm-Optimierungsverfahren verwendet. Dabei kann ein Partikel-Schwarm-Optimierungsverfahren verwendet werden, das sich gut für das beschriebene Verfahren eignet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: eine schematische Darstellung verschiedener Verfahren zur Ermittlung des Steuerverfahrens,
- FIG 2: eine schematische Darstellung zur Ermittlung eines Systemmodells auf Basis eines Betriebsdatensatzes,
- FIG 3: eine schematische Darstellung eines ersten Verfahrensstandes für ein Schwarm-Optimierungsverfahren,
- FIG 4: eine schematische Darstellung eines zweiten Verfahrensstandes für das Schwarm-Optimierungsverfahren, und
- Fig. 5: einen schematischen Aufbau eines Systems zur Durchführung des Verfahrens darstellt.

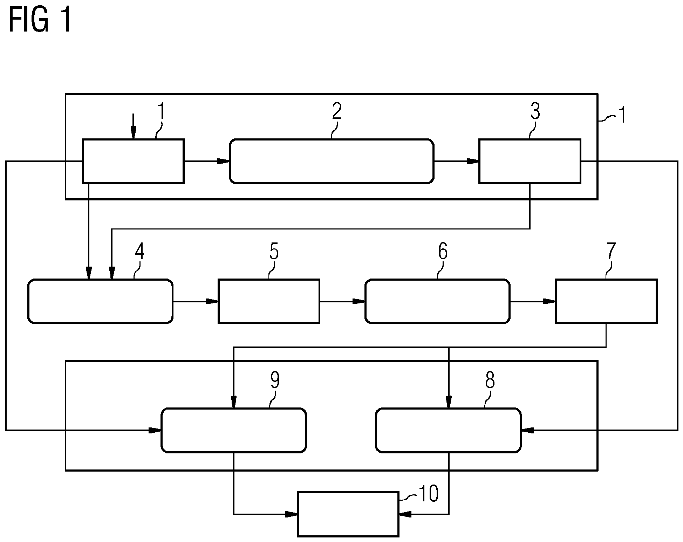

FIG 1 zeigt in einer schematischen Darstellung verschiedene Verfahren zur Erzeugung eines Steuerverfahrens für ein technisches System. Bei einem ersten Programmpunkt 1 wird ein vorgegebener Betriebsdatensatz zur Steuerung des technischen Systems bereitgestellt. Der Betriebsdatensatz wird beispielsweise experimentell ermittelt oder mit vorgegebenen Werten belegt. In einer einfachen Ausführungsform werden Zufallswerte für die Steuerung während der Erstellung des Betriebsdatensatzes beim ersten Programmpunkt 1 verwendet. Der Betriebsdatensatz wird vom ersten Programmpunkt 1 direkt an einen vierten Programmpunkt 4 übermittelt.

Bei einem zweiten Programmpunkt 2 wird anhand des Betriebsdatensatzes mithilfe eines Regressionstrainings mithilfe eines Maschinenlernverfahrens ein Systemmodell 3 für das technische System ermittelt.

Dabei kann beispielsweise ein neuronales Netz, insbesondere ein rekurrentes neuronales Netz, verwendet werden, um das Systemmodell 3 für das technische System, beispielsweise eine Anlage zur Stromerzeugung zu ermitteln. Die Anlage zur Stromerzeugung kann beispielsweise als Gasturbine oder als Windturbine ausgebildet sein. Das ermittelte Systemmodell 3 wird an den vierten Programmpunkt 4 übermittelt.

Beim vierten Programmpunkt 4 wird unter Verwendung des Betriebsdatensatzes und des Systemmodells 3 mithilfe eines gradientenfreien Optimierungsverfahrens, insbesondere mithilfe eines Schwarm-Optimierungsverfahrens ein Steuerdatensatz 5 ermittelt. Der Steuerdatensatz 5 umfasst wenigstens für einen Zustand des Systems einen zugeordneten optimalen Wert für wenigstens einen Steuerparameter, insbesondere zugeordneten Werte für mehrere Steuerparameter. Vorzugsweise umfasst der Steuerdatensatz für eine Vielzahl von Zuständen des Systems die zugeordneten optimalen Werte von Steuerparametern. Somit beschreibt der Steuerdatensatz Werte für Steuerparameter zur Steuerung des technischen Systems insbesondere für verschiedene Zustände des technischen Systems, um ein gewünschtes optimales Verhalten des technischen Systems zu erreichen.

Der Steuerdatensatz 5 wird bei einem fünften Programmpunkt 6 verwendet, um relevante Steuerparameter mit einem Auswahlverfahren zu ermitteln. Das Auswahlverfahren beim fünften Programmpunkt 6 ist ausgebildet, um eine begrenzte Anzahl von relevanten technischen Parametern des technischen Systems auszuwählen, die eine bessere Steuerung des technischen Systems ermöglichen als andere technischen Parametern des technischen Systems.

Zur Auswahl der relevanten Parameter können verschiedene Verfahren verwendet werden. Beispielsweise können Verfahren verwendet werden, die auf Basis einer gegenseitigen Information (Mutual Information) in Bezug auf die Steuerparameter basieren. Beispielsweise kann ein AMIFS-Verfahren verwendet werden, um die festgelegte Anzahl von relevanteren Parametern aus den zur Verfügung stehenden Parametern des technischen Systems auszuwählen. Das AMIFS-Verfahren (Adaptive Feature Selection by Using Mutual Information) ist beispielsweise von Michel Tesmer und Pablo A. Estévez, in 2004 IEEE, 0-7803-8359-1/04, Seite 303 bis Seite 308 beschrieben. Zudem können auch andere Auswahlverfahren zur Auswahl von der vorgegebenen Anzahl von relevanteren Parametern verwendet werden, wie beispielsweise von Isabelle Guyon et al. in "An Introduction to Variable and Feature Selection", Journal of Machine Learning Research 3(2003) 1157-1182 beschrieben ist. Weiterhin kann auch ein MIFS oder ein MIFS-U-Verfahren zur Auswahl der vorgegebenen Anzahl von relevanteren Parametern verwendet werden. Versuche haben jedoch gezeigt, dass das AMIFS-Verfahren sich besonders für die Auswahl der relevanteren Parameter bei technischen Systemen wie Anlagen zur Stromerzeugung eignet. Die Verfahren MIFS und MIFS-U sind beispielsweise von R. Battiti in "Using Mutual Information for Selecting Features in Supervised Neural Net Learning", IEEE Transaction on Neuronal Networks, Volume 5, Issue 4, Pages 537 to 550, July 1994 beschrieben.

Beim fünften Programmpunkt 6 wird eine Anzahl von relevanten Parametern 7 aus der Menge der zur Verfügung stehenden Parameter mithilfe eines der vorab beschriebenen Verfahren ermittelt. Mithilfe der ermittelten relevanten Parameter 7 wird bei einem sechsten Programmpunkt 8 mithilfe eines modellbasierten Lernverfahrens ein optimiertes Steuerverfahren mit verbesserten Werten für das technische System ermittelt. Dabei wird z.B. das beim zweiten Programmpunkt 2 ermittelte Systemmodell 3 als Modell für das modellbasierte Lernverfahren verwendet.

Das Steuerverfahren kann in Form von Funktionen, Tabellen, Kennlinien usw. erstellt werden. Beispielsweise kann das Steuerverfahren als Datensatz ausgebildet sein, wobei der Datensatz für mehrere Zustände des Systems jeweils einen Wert für einen Steuerparameter aufweist. Zudem kann das Steuerverfahren als Datensatz ausgebildet sein, wobei der Datensatz für jeweils einen Zustand des technischen Systems jeweils Werte für mehrere Steuerparameter des technischen Systems aufweist.

Mithilfe der relevanten Parameter 7 kann alternativ bei einem siebten Programmpunkt 9 und unter Berücksichtigung des beim ersten Programmpunkt 1 bereitgestellten Betriebsdatensatzes mithilfe eines modellfreien bestärkenden Lernverfahrens (model free reinforcement learning), insbesondere mit einem bestärkenden Maschinenlernverfahren ein optimiertes Steuerverfahren für das technische System ermittelt werden.

Das weitere Steuerverfahren kann in Form von Funktionen, Tabellen, Kennlinien usw. erstellt sein. Beispielsweise kann das weitere Steuerverfahren als Datensatz ausgebildet sein, wobei der Datensatz für mehrere Zustände des Systems jeweils einen Wert für einen Steuerparameter aufweist. Zudem kann das weitere Steuerverfahren als Datensatz ausgebildet sein, wobei der Datensatz für jeweils einen Zustand des technischen Systems jeweils Werte für mehrere Steuerparameter des technischen Systems aufweist.

Bei einem folgenden achten Programmpunkt 10 werden entweder das vom sechsten Programmpunkt 8 ermittelte Steuerverfahren oder das vom siebten Programmpunkt 9 ermittelte weitere Steuerverfahren für die Steuerung des technischen Systems von einer Steuereinheit verwendet.

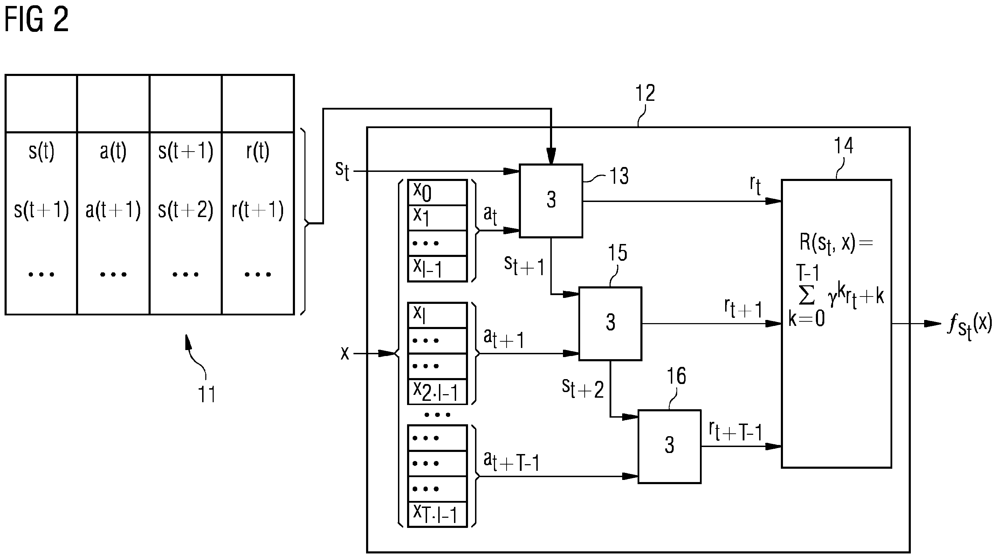

FIG 2 zeigt in einer schematischen Darstellung ein mögliches Verfahren, mit dem beim zweiten Programmpunkt 2 aufgrund der vom ersten Programmpunkt 1 zur Verfügung gestellten Betriebsdaten ein Systemmodell 3 für das technische System ermittelt wird.

Die Beschreibung des technischen Systems mithilfe eines Zustandsraums S, eines Aktionsraums A und einer stochastischen Übergangsfunktion P entspricht dem bekannten Markov-Entscheidungsprozess. Es wird davon ausgegangen, dass das technische System mit einem solchen Prozess beschrieben werden kann. Für diesen Prozess existiert eine Belohnungsfunktion c: S x A x S → R, wobei R den Raum der Belohnungen in Form von reellen Zahlen rₜ darstellt, welche das System für die Wahl einer Aktion aₜ im Zustand sₜ erhält, und wobei das System in den Zustand sₜ₊₁ überführt wird.

Das beschriebene Verfahren ist auf jede Art von technischem System anwendbar, dessen dynamisches Verhalten sich durch einen Zustandsraum S und einen Aktionsraum A mit einer stochastischen Übergangsfunktion P(_{St}, aₜ, sₜ₊₁) beschreiben lässt. Hierbei sind sₜ, sₜ₊₁ Zustände des technischen Systems zu den Zeitpunkten t beziehungsweise t+1. Zudem bezeichnet aₜ eine Steueraktion, die auf das technische System zum Zeitpunkt t einwirkt. Zudem bezeichnet aₜ₊₁ eine Steueraktion, die auf das technische System zum Zeitpunkt t+1 einwirkt.

Jeder Zustand des technischen Systems wird durch eine Mehrzahl von Zustandsvariablen beziehungsweise Umgebungsvariablen charakterisiert. Die Umgebungsvariablen sind messbare Zustandsgrößen des technischen Systems, beispielsweise der Gasdruck, die Gastemperatur, eine Brennkammerbeschleunigung und dergleichen für eine Gasturbine. In analoger Weise sind die Zustandsgrößen beispielsweise eine Windgeschwindigkeit, eine Drehzahl des Rotorblattes, eine Drehgeschwindigkeit des Rotorblattes, eine Beschleunigung des Rotorblattes und dergleichen bei einer Windanlage.

Die Aktionen aₜ sind Steuerparameter, d.h. Stellgrößen des technischen Systems zum Zeitpunkt t, die wiederum einen Einfluss auf spätere Zustände des technischen Systems haben. Ein Zustand sₜ kann mehrere Zustandsvariablen aufweisen bzw. durch mehrere Zustandsvariablen gekennzeichnet sein. Analog zum Zustand sₜ kann auch eine Aktion aₜ eine Mehrzahl von Aktionsvariablen umfassen, und eine Aktion kann somit durch die Veränderung von mehreren Stellgrößen charakterisiert sein. Ein Beispiel von einer an einem technischen System veränderbaren Stellgröße ist die Einstellung von Ventilen in einer Gasturbine. Bei einer Windturbine kann es beispielsweise die Winkelposition der Rotorblätter oder die Ausrichtung des Rotors an sich sein. Es können jedoch auch alle anderen Steuerparameter des technischen Systems, insbesondere der Windturbine oder der Gasturbine als Aktionsvariable verwendet werden. Oftmals sind die technischen Systeme auch so ausgelegt, dass sich der Zustandsraum und der Aktionsraum überschneiden, das heißt, dass eine Stellgröße im technischen System auch den Zustand des technischen Systems charakterisiert.

Es ist nunmehr das Ziel, eine optimale Regel für alle Aktionen in einem vorgegebenen zukünftigen Zeitraum zu bestimmen, welche die erwartete kumulierte Belohnungsfunktion oder die durchschnittliche Belohnungsfunktion c für jeden Zustand des vorgegebenen Zeitraums maximiert. Das Maximieren der Belohnungsfunktion c entspricht dabei einer möglichen Ausgestaltung einer Aktionsauswahlregel. Die Belohnungsfunktion wird insbesondere so festgelegt, dass sie erwünschte Eigenschaften des technischen Systems widerspiegelt. Im einfachsten Fall könnte die Belohnungsfunktion beispielsweise für einen gewünschten Zustand des technischen Systems oder für eine gewünschte Abfolge von Zuständen des technischen Systems in dem festgelegten zukünftigen Zeitraum einen Maximalwert aufweisen. Im Folgenden wird davon ausgegangen, dass das technische System durch einen Markov-Entscheidungsprozess mit diskreten Zeitschritten beschrieben wird, wobei die Zustandsräume S und A kontinuierlich sind.

FIG 2 zeigt eine schematische Darstellung eines Verfahrens zum Ermitteln eines Systemmodells für ein technisches System. Bei dem Verfahren gemäß FIG 2 ist in Form einer Tabelle 11 ein Betriebsdatensatz dargestellt, der gemäß dem ersten Programmpunkt 1 zur Verfügung gestellt wird. Der Betriebsdatensatz wurde z.B. für eine vorgegebene Zeitdauer am technischen System gemessen bzw. erfasst. Dabei sind mit s(t) die Zustände des technischen Systems, mit a(t) die für den Zustand s(t) festgelegte Aktion und mit r(t) die für die Aktion a(t) beim Zustand s(t) erreichte Belohnung bezeichnet. Mit s(t+1) ist der Zustand dargestellt, der sich aus dem Zustand s(t) nach der Aktion a(t) einstellt.

Aufgrund des vorliegenden Betriebsdatensatzes wird das Systemmodell 3 z.B. durch überwachtes Maschinenlernen so lange angepasst, bis die gemessenen Zustände und die mit dem Systemmodell 3 berechneten Zustände möglichst übereinstimmen.

Jede Aktion aₜ kann mehrere Aktionsvariablen x₀, x₁, ..., x_{I-1} aufweisen. Die Aktionsvariablen stellen somit wenigstens eine oder mehrere Stellgrößen dar. In dem Verarbeitungsblock 12 wird nun auf den Zustand sₜ die Aktion aₜ bei einem ersten Verarbeitungsschritt 13 angewendet. Dabei wird ein Systemmodell 3 verwendet. Beim ersten Verarbeitungsschritt 13 wird der sich dann einstellende nächste Zustand sₜ₊₁ ermittelt. Zudem wird für den Übergang zwischen dem Zustand sₜ und dem Zustand sₜ₊₁ eine Belohnung rₜ ermittelt. Die Belohnung rₜ wird an einen Summationsblock 14 weitergegeben.

Zudem wird bei einem zweiten Verarbeitungsschritt 15 auf den Zustand sₜ₊₁ die Aktion aₜ₊₁ angewendet. Dabei wird wieder das Systemmodell 3 verwendet. Im zweiten Verarbeitungsschritt 15 wird ein sich auf Basis des Zustandes sₜ₊₁ und der Aktion aₜ₊₁ sich einstellender Zustand sₜ₊₂ ermittelt. Zudem wird für den zweiten Verarbeitungsschritt 15 eine Belohnung rₜ₋₁ ermittelt. Die Belohnung rₜ₊₁ wird dem Summationsblock 14 zugeführt.

Es werden für eine festgelegte Anzahl von Zuständen s_{t+(T-1)} die entsprechenden Aktionen aₜ₊₂ bis a_{t+T-1} mit entsprechenden Verarbeitungsschritten ausgeführt und die zugehörigen Belohnungen rₜ₊₂ bis r_{t+T-1} ermittelt und an den Summationsblock 14 weitergeleitet. Dabei wird jeweils das Systemmodell 3 verwendet.

Im Summationsblock 14 werden die Belohnungen rₜ, rₜ₊₁, ..., r_{t+T-1} aufsummiert, wobei vorzugsweise ein Gewichtungsfaktor γ^{k} verwendet werden kann. Der Gewichtungsfaktor γ^{k} ist für k = 0 gleich 1 und nimmt mit der Größe von k ab. γ kann Werte zwischen 0 und 1 annehmen. Auf diese Weise wird erreicht, dass ferner in der Zukunft liegende Zustände, die unsicherer sind, einen geringeren Einfluss auf die Summe der Belohnungen haben. Die Summe der Belohnungen, die im Summationsblock 14 ermittelt wird, kann für eine Optimierung des Modells, das heißt für die Optimierung der Aktionen aₜ₊ₖ zu den jeweiligen Zuständen sₜ₊ₖ verwendet werden. Dazu können in iterativen Schritten die einzelnen Aktionen aₜ verändert werden. Dadurch wird eine Trajektorie optimiert.

Im vierten Programmpunkt 4 der FIG 1 werden der Betriebsdatensatz vom ersten Programmpunkt 1 und das vom zweiten Programmpunkt 2 auf Basis des Betriebsdatensatzes ermittelte Systemmodell verarbeitet. Beim vierten Programmpunkt 4 wird auf Basis des Betriebsdatensatzes und des Systemmodells mithilfe eines insbesondere gradientenfreien Optimierungsverfahrens, insbesondere mithilfe eines Schwarm-Optimierungsverfahrens ein verbesserter Steuerdatensatz 5 ermittelt. Abhängig von der gewählten Ausführung kann ein Partikel-Schwarm-Optimierungsverfahren verwendet werden.

Ein Verfahren zur Ermittlung eines zweiten Steuerdatensatzes auf Basis des ersten Steuerdatensatzes unter Verwendung eines Schwarm-Optimierungsverfahrens ist z.B. aus WO 2015/043806 A1 bekannt. Weiterhin ist ein Schwarm-Optimierungsverfahren aus "Reinforcement Learning with Particle Swarm Optimization Policy (PSO-P) in Continuous State and Action Spaces" von Daniel Hein et al., Volume 7, Issue 3, July-September 2016, International Journal of Swarm Intelligence Research, Seite 23 bis 42 bekannt.

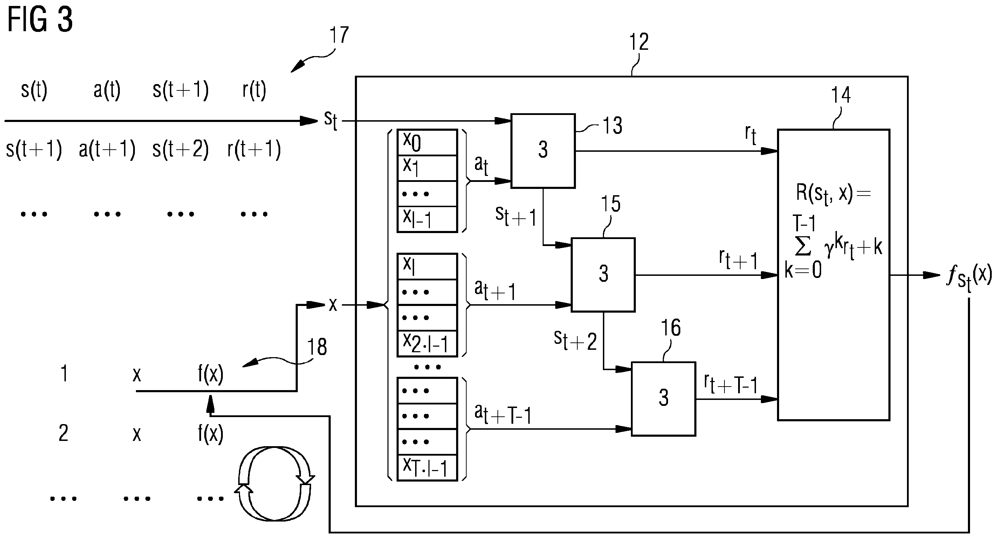

FIG 3 zeigt eine schematische Darstellung eines Schwarm-Optimierungsverfahrens. Es ist eine zweite Tabelle 17 mit einem Betriebsdatensatz dargestellt, der z.B. am technischen System erfasst bzw. gemessen wurde. Dabei sind in einer Spalte die Zustände s(t) zum Zeitpunkt t, die Aktionen a(t) für den Zustand s(t) zum Zeitpunkt t, die daraus folgenden Zustände s(t+1) zum Zeitpunkt t+1 und die Belohnungen r(t) dargestellt. Abhängig von der gewählten Ausführungsform können die Belohnungen r(t) auch erst mithilfe dieses Verfahrens ermittelt werden.

Weiterhin ist ein zweiter Verarbeitungsblock 12, mit Verarbeitungsschritten 13, 15, 16 und mit einem Summationsblock 14 vorgesehen. In den Verarbeitungsschritten 13, 15, 16 wird das bei FIG 2 ermittelte Systemmodell 3 eingesetzt, um aus einem gemessenen Zustand und den möglichen Aktionen sich ergebende Zustände und sich daraus ergebende Belohnungen zu berechnen. Zusätzlich wird eine Fitnessfunktion fₛₜ(x) ermittelt, wobei ein Aktionsvektor x die Aktionen aₜ, aₜ₊₁ bis a_{t+T-1} aufweist.

Bei diesem Verfahren wird iterativ gemäß dem Schwarm-Optimierungsverfahren der Vektor x für die Zustandsvariablen verändert, bis ein Vektor x für die Zustandsvariablen ermittelt wird, der eine maximale Belohnungssumme für die festgelegte Anzahl von Aktionen, das heißt eine maximale Fitnessfunktion fₛₜ(x) aufweist. Details zu dem beschrieben Verfahren sind in dem Artikel "Reinforcement Learning with Particle Swarm Optimization Policy (PSO-P) in Continuous State and Action Spaces", Daniel Hein et al., International Journal of Swarm Intelligence Research, Volume 7, Issue 3, July-September 2016, Seite 23 bis 42 beschrieben.

Beispielsweise werden die Aktionssequenzen x entsprechend in einer dritten Tabelle 18 der Reihenfolge nach mit der zugehörigen Fitnessfunktion f(x) aufgelistet.

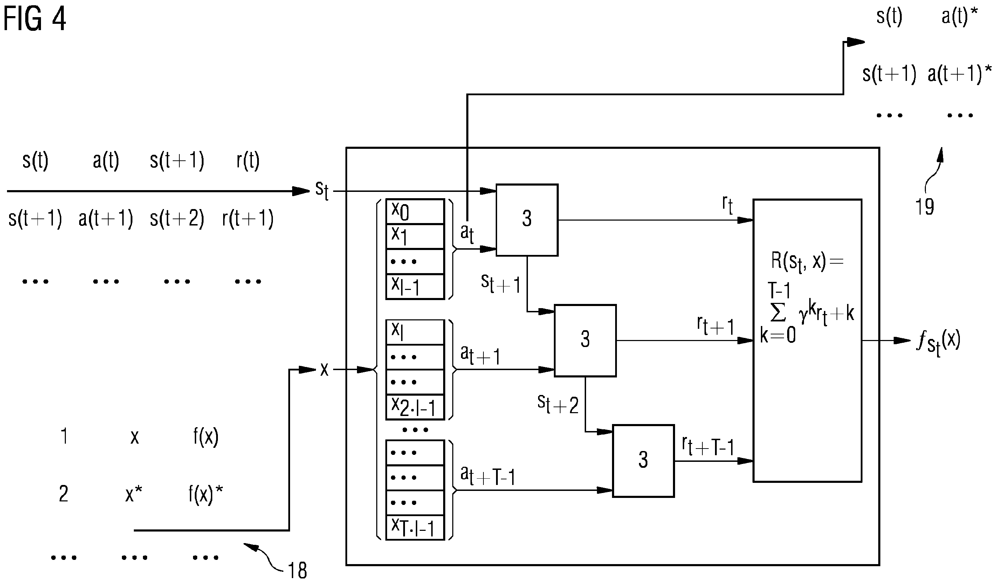

FIG 4 zeigt das Verfahren gemäß FIG 3, wobei nach der Ermittlung der besten Aktionssequenz x gemäß der dritten Tabelle 18 in einer vierten Tabelle 19 der Zustand s(t) und die zugehörige Aktion a(t) der besten Aktionssequenz eingeschrieben werden.

Anschließend wird bei Festlegung der Aktion a(t) das Verfahren gemäß FIG 3 erneut durchlaufen und dabei wieder eine Variation der Aktionssequenz x durchgeführt, wobei die Aktion a(t) unverändert bleibt. Die sich aufgrund dieser Variation ergebende optimale Aktionssequenz x wird dazu verwendet, um die zweite optimale Aktion a(t+1) festzulegen und in die vierte Tabelle 19 einzuschreiben. Auf diese Weise wird eine vierte Tabelle 19 erstellt, in der für die Zustände s(t) bis s(t+T-1) optimierte Aktionen a(t) bis a(t+T-1) ermittelt worden sind. Die vierte Tabelle 19 wird anschließend als zweiter Steuerdatensatz 5 an den fünften Programmpunkt 6 übergeben. Der folgende Teil des Verfahrens, in dem ein zweiter Steuerdatensatz genutzt wird, ist nicht Teil der Erfindung und wird aus diesem Grund nur beispielhaft erläutert.

Der fünfte Programmpunkt 6 ermittelt auf Basis des zweiten Steuerdatensatzes 5 mithilfe eines Auswahlverfahrens eine festgelegte Anzahl von ausgewählten Parametern, die eine bessere Steuerung des technischen Systems als die festgelegte Anzahl von anderen Parametern ermöglicht.

Bei dem Auswahlverfahren kann, wie bereits oben ausgeführt, eines von mehreren Verfahren verwendet werden. Beispielsweise können Verfahren mit einer gegenseitigen Information der Parameter zur Auswahl der Parameter verwendet werden, wie beispielsweise von Jorge R. Vergara, Pablo A. Estévez, in "A Review of Feature Selection Methods Based on Mutual Information", beschrieben wird. Vorzugsweise wird ein adaptives gegenseitige Information berücksichtigendes Auswahlverfahren (AMIFS) verwendet, wie bereits beschrieben wurde.

Somit wird als Ergebnis des fünften Programmpunktes 6 eine vorgegebene Anzahl von relevanteren, das heißt wichtigeren Parametern des technischen Systems für eine optimierte Steuerung ermittelt.

Die relevanteren Parameter 7 werden anschließend entweder mithilfe eines modellbasierten Maschinenlernverfahrens gemäß der im siebten Programmpunkt 8 oder mithilfe eines modellfreien Maschinenlernverfahrens gemäß dem achten Programmpunkt 9 verarbeitet, um ein Steuerverfahren zu ermitteln, das beim neunten Programmpunkt 10 zur Steuerung des technischen Systems verwendet wird.

Beispielsweise kann eine Belohnungsfunktion (rₜ, rₜ₊₁, ...) ein Optimierungskriterium wie zum Beispiel möglichst geringe Emission an Schadstoffen bei Gasturbinen oder möglichst hohe Stromerzeugung bei Windkraftanlagen darstellen. Zudem können jedoch auch andere Optimierungskriterien bei der Ermittlung der Belohnungsfunktion berücksichtigt werden.

Für die Berechnung der gegenseitigen Information können für eine Gasturbine zum Beispiel folgende Parameter als Klassen verwendet werden: Umgebungsdruck, Umgebungstemperatur, Temperatur der Gasturbine, Abgastemperatur, Ventilstellungen usw. Für eine Windenergieanlage, das heißt für eine Windturbine, können beispielsweise folgende Parameter als Klassen verwendet: Drehzahl des Rotors, Leistung der Stromerzeugung, Anstellwinkel der Rotorblätter, Ausrichtung des Rotors, Tageszeit, Luftdruck usw.

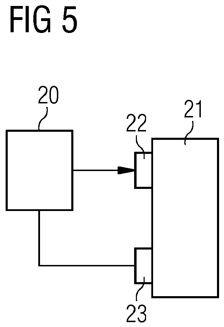

FIG 5 zeigt in einer schematischen Darstellung eine Recheneinheit 20, die über Steuerleitungen mit Aktoren 22 einer Anlage zur Stromerzeugung 21 verbunden ist. Zudem ist die Recheneinheit 20 über Sensorleitungen mit Sensoren 23 verbunden. Die Sensoren 23 sind ausgebildet, um Parameter, insbesondere Betriebsparamater und Umgebungsparameter der Anlage zur Stromerzeugung 21 zu erfassen. Die Recheneinheit 20 ist ausgebildet, um die Anlage zur Stromerzeugung gemäß dem ermittelten Steuerverfahren gemäß dem neunten Programmpunkt 10 zu steuern beziehungsweise zu regeln.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, wobei der Schutzumfang alleine durch die folgenden Ansprüche festgelegt ist.

## Patentansprüche

1. Verfahren zum rechnergestützten Steuern eines technischen Systems zum Erreichen eines vorgegebenen technischen Verhaltens des technischen Systems,
wobei ein Betriebsdatensatz mit Zuständen des technischen Systems sowie den für die Zustände festgelegten Aktionen, die als Stellgrößen des technischen Systems in Steuerparametern vorliegen, zum Steuern des Systems bereitgestellt wird(1),
wobei ein Systemmodell (3) zur Beschreibung der Funktionsweise des technischen Systems bereitgestellt wird (2),
wobei anhand des Betriebsdatensatzes und anhand des Systemmodells mit einem Optimierungsverfahren ein Steuerdatensatz (5) mit zumindest einem zur Erreichung eines optimalen Verhaltens des technischen Systems optimalen Wert für wenigstens einen Steuerparameter für wenigstens einen Zustand des Systems mittels einer Belohnungsfunktion ermittelt wird,
wobei auf Basis des Steuerdatensatzes mit dem zumindest einen optimalen Wert mithilfe eines Auswahlverfahrens eine festgelegte Anzahl relevanterer Parameter des technischen Systems ausgewählt werden (6), die eine vorteilhaftere Steuerung des technischen Systems ermöglichen als die festgelegte Anzahl von anderen Parametern des technischen Systems,
wobei mit den ausgewählten relevanteren Parametern und entweder mithilfe eines modellbasierten (8) oder mithilfe eines modellfreien (9) bestärkenden Lernverfahrens ein Steuerverfahren für das technische System ermittelt wird,
wobei mithilfe des Steuerverfahrens das technische System gesteuert wird (10).

2. Verfahren nach Anspruch 1, wobei das Auswahlverfahren ein adaptives wechselseitiges Informationsmerkmal-Auswahlverfahren (AMIFS) ist.

3. Verfahren nach einem der vorhergehenden Ansprüche, wobei mithilfe eines modellbasierten bestärkenden Lernverfahrens anhand der ausgewählten relevanten Parameter das Steuerverfahren ermittelt wird.

4. Verfahren nach einem der vorhergehenden Ansprüche, wobei als Optimierungsverfahren ein Schwarm-Optimierungsverfahren verwendet wird.

5. Verfahren nach Anspruch 4, wobei als Schwarm-Optimierungsverfahren ein Partikel-Schwarm-Optimierungsverfahren verwendet wird.

6. Recheneinheit, die über Sensorleitungen mit Sensoren und über Steuerleitungen mit Aktoren verbunden ist und dazu ausgebildet ist, um ein Verfahren gemäß einem der vorhergehenden Ansprüche auszuführen.

7. Computerprogrammprodukt mit einem auf einem maschinenlesbaren Träger gespeicherten Programmcode zur Durchführung eines Verfahrens gemäß einem der Ansprüche 1 bis 5 bei dessen Ausführung.

## Claims

1. Method for the computer-based control of a technical system for achieving a predetermined technical behaviour of the technical system,
wherein an operating dataset with states of the technical system and the actions defined for the states, which exist as variables of the technical system in control parameters, is provided (1) to control the system,
wherein a system model (3) is provided (2) to describe the mode of operation of the technical system,
wherein on the basis of the operating dataset and on the basis of the system model with an optimisation method, a control dataset with at least one value which is optimal for achieving an optimal behaviour of the technical system is determined for at least one control parameter for at least one state of the system by means of a reward function,
wherein on the basis of the control dataset with the at least one optimal value with the aid of a selection method, a fixed number of more relevant parameters of the technical system are selected (6), which enable a more advantageous control of the technical system than the fixed number of other parameters of the technical system,
wherein a control method for the technical system is determined with the selected, more relevant parameters and either with the aid of a model-based (8) or with the aid of a model-free (9) reinforcing learning method,
wherein the technical system is controlled (10) with the aid of the control method.

2. Method according to claim 1, wherein the selection method is an adaptive alternating information feature selection method (AMIFS).

3. Method according to one of the preceding claims, wherein the control method is determined on the basis of the selected relevant parameters with the aid of a model-based reinforcing learning method.

4. Method according to one of the preceding claims, wherein a swarm optimisation method is used as an optimisation method.

5. Method according to claim 4, wherein a particle swarm optimisation method is used as a swarm optimisation method.

6. Computing unit, which is connected to sensors by way of sensor lines and to actuators by way of control lines and is embodied to execute a method according to one of the preceding claims.

7. Computer program product with a program code stored on a machine-readable carrier for carrying out a method according to one of claims 1 to 5 during its execution.

## Revendications

1. Procédé de commande assisté par ordinateur d'un système technique pour obtenir un comportement technique donné à l'avance du système technique,
dans lequel on se procure (1) pour la commande du système un ensemble de données de fonctionnement ayant des états du système technique ainsi que les actions déterminées pour les états, qui sont présentes, comme grandeurs de réglage du système technique, en des paramètres de commande,
dans lequel on se procure (2) un modèle (3) de système pour la description du mode de fonctionnement du système technique,
dans lequel, à l'aide de l'ensemble de l'ensemble de données de fonctionnement et à l'aide du modèle de système, on détermine, au moyen d'une fonction de rétribution par un procédé d'optimisation, un ensemble (5) de données de commande ayant au moins une valeur optimale, pour atteindre un comportement optimum du système technique, du au moins un paramètre de commande pour au moins un état du système,
dans lequel, sur la base de l'ensemble de données de commande ayant la au moins une valeur optimale, on sélectionne (6), à l'aide d'un procédé de sélection, un nombre déterminé de paramètres pertinents du système technique, qui rendent possible une commande plus avantageuse du système technique que le nombre déterminé d'autres paramètres du système technique,
dans lequel, avec les paramètres plus pertinents sélectionnés et, à l'aide d'un procédé d'apprentissage renforçant soit basé (8) sur un modèle, soit sans modèle (9), on détermine un procédé de commande du système technique,
dans lequel on commande (10) le système technique à l'aide du procédé de commande.

2. Procédé suivant la revendication 1, dans lequel le procédé de sélection est un procédé de sélection à caractéristique d'information mutuelle adaptatif (AMIFS).

3. Procédé suivant l'une des revendications précédentes, dans lequel on détermine le procédé de commande à l'aide d'un procédé d'apprentissage renforçant basé sur un modèle à l'aide du paramètre pertinent sélectionné.

4. Procédé suivant l'une des revendications précédentes, dans lequel on utilise un procédé d'optimisation en essaim.

5. Procédé suivant la revendication 4, dans lequel on utilise un procédé d'optimisation en essaim de particules comme procédé d'optimisation en essaim.

6. Unité informatique, qui est reliée par des lignes de capteur à des capteurs et par des lignes de commande à des actionneurs, et qui est constituée pour exécuter un procédé suivant l'une des revendications précédentes.

7. Produit de programme d'ordinateur ayant un code de programme mis en mémoire sur un support, déchiffrable par machine, pour exécuter un procédé suivant l'une des revendications 1 à 5, lors de son exécution.
